# EUROPEAN PATENT SPECIFICATION

(11) **EP 0 551 608 B1**
(45) Date of publication and mention of the grant of the patent: **08.04.1998**
(21) Application number: 92120798.1
(22) Date of filing: 05.12.1992
(51) Int. Cl.: C08K 5/36, C08K 5/50, C08L 69/00

(54) **Polyester carbonate mixture and plate-shaped or film-shaped products formed therefrom**
Polyestercarbonat-Mischung und daraus geformte platten- oder filmförmige Produkte
Mélange à base de polyestercarbonate et produits en forme de plaques ou de films formés à partir de celui-ci

(30) Priority: 14.01.1992 NL 9200052
(43) Date of publication of application: 21.07.1993
(73) Proprietor: GENERAL ELECTRIC COMPANY, Schenectady, NY 12345 (US)
(72) Inventor: Berndsen, Josef Gerardus, NL-4600 AC Bergen op Zoom (NL); Claesen, Christianus Adrianus Arnoldus, NL-4600 AC Bergen op Zoom (NL); Van Es, Peter Willem, NL-4600 AC Bergen op Zoom (NL)
(74) Representative: Grever, Frederik

(56) References cited:
- EP-A- 0 465 923
- WO-A-91/09896
- DE-A- 2 206 720
- FR-A- 2 223 423
- US-A- 3 494 885
- US-A- 4 880 856

## Description

The invention relates to a polymer mixture based on a copolyester carbonate derived from a dihydric phenol compound, a carbonate precursor and an aliphatic alpha, omega dicarboxylic acid or an ester precursor thereof mixed with a stabiliser, the polymer mixture comprising an organic thio compound or an organic phosphine compound as a stabiliser.

WO-A-91/09896 discloses polymer mixtures based on a copolyester carbonate of the type meant hereinbefore. It is also indicated in the same publication that the polymer mixtures in question are particularly suitable to manufacture plate-shaped or film-shaped products therefrom and that the said products need not be dried before being thermally deformed. This latter property is of particular importance because plate-shaped or film-shaped products manufactured from aromatic polycarbonates do have to be dried before being thermally deformed. When this drying would not be done, "bubbles" will be formed at the surface of the thermally deformed product.

As is generally known, the traditional aromatic polycarbonates show a tendency of discoloring, in particular yellowing, when they are exposed to enhanced temperatures, for example, at the conventionally used extrusion temperatures of approximately 250 to 300°C. Copolyester carbonates also show the tendency of yellowing. In order to counteract the said discoloring, stabilisers are added; those most conventionally used are organic phosphite compounds. These prove to be active also to suppress the discoloring of copolyester carbonates. It has been found quite unexpectedly that the use of phosphites causes the advantage mentioned hereinbefore, namely that it is not necessary to perform a drying treatment before the thermal deformation of plate-shaped or film-shaped products, to be lost.

EP-A-0465923 describes compositions comprising copolyestercarbonates with units derived from dodecanedioc acid and a blend of stabilisers. In the examples a stabiliser blend of a phosphite, a thioester and a hindered phenol has been described. It has been experimentally verified that such a blend of stabilisers results in a composition with the same drawbacks as described in the previous paragraph: bubble formation if no predrying step is included in the processing.

The present invention provides polymer mixtures on the basis of the polyester carbonates mentioned hereinbefore which show a lower extent of yellowing than the non-stabilised polymer mixtures and nevertheless need not be dried before products formed therefrom are thermally deformed.

For that purpose the polymer mixtures according to the invention comprise certain stabilisers, namely organic thio compounds and/or organic phosphine compounds, but they do not comprise a phosphite.

Compounds of the formula R - S - R' are preferably used as thio compounds in a quantity from 0.01 to 3 parts by weight per 100 parts by weight of the copolyester carbonate, R being an organic radical and R' being an organic radical or a hydrogen atom.

As stated hereinbefore, the polymer mixture according to the invention comprises a copolyester carbonate derived from a dihydric phenol compound, a carbonate precursor and an aliphatic alpha, omega dicarboxylic acid or an ester precursor. Any compound as used, for example, for the preparation of aromatic polycarbonates may be considered as a dihydric phenol compound and as a carbonate precursor. Examples thereof are described in the patent publication WO-A-91/09896 mentioned hereinbefore. As an alpha, omega dicarboxylic acid may be used dicarboxylic acids having from six to twenty-five carbon atoms; examples of suitable dicarboxylic acids are also described in WO-A-91/09896. Suitable methods of preparing the copolyester carbonates are described in the same publication and in the literature mentioned therein. The copolyester carbonate comprises approximately 50 mol% of units derived from the carbonate precursor, 35-49 mol% of units derived from the dihydric phenol compound and 1-15 mol% of units derived from the dicarboxylic acid.

Examples of suitable thio compounds which may be used in the polymer mixture according to the invention are:
dialkyl thioethers, pentaerythritol tetrakis (lauryl thiopropionate), diar(alk)yl thioesters, as well as (ar)alkyl thiols or arylthiols.

Suitable phosphine compounds are triphenyl phosphine, triaryl phosphines or trialkyl phosphines.

The polymer mixtures according to the invention may be prepared according to any conventionally used method of preparing polymer mixtures, for examples, by compounding in an extruder.

In addition to the constituents mentioned hereinbefore the polymer mixtures may comprise any conventionally used additives. In the choice of the additives care should always be taken that the properties of the polymer mixture and of the products formed therefrom are not detrimentally influenced; care should be taken in particular that the property of not having to perform a drying operation before the shaped products are thermally deformed is not lost.

Film-shaped or plate-shaped products may be manufactured from the polymer mixture according to the invention, for example, by extrusion. These plate-shaped or film-shaped products may be thermally deformed. In this process the said products are heated to a temperature above their Tg and are then deformed by means of a matrix. As already indicated hereinbefore, it is not necessary for the products formed from the polymer mixture according to the invention first to pre-dry the plate-shaped or film-shaped products.

The invention wil now be described in greater detail with reference to the ensuing specific examples.

### Examples I to III inclusive

### Comparative examples A to F inclusive

Various polymer mixtures were prepared starting from the constituents mentioned hereinafter:
- -PC:: an aromatic polycarbonate derived from bisphenol A and phosgene having an intrinsic viscosity of 58 mil lilitres per gram, measured in dichloromethane.
- -CPC:: a copolyester carbonate derived from bisphenol A (50 mol%), phosgene (40 mol%) and alpha, omega dodecanedicarboxylic acid (10 mol%), having an intrinsic viscosity of 58.2 millilitres per gram, measured in dichloromethane.
- -F-1:: tri- {2,6-di-)t.butylphenyl)} phosphite
- -F-2:: tri-(4-nonylphenyl)phosphite
- -F-3:: Ultranox 626 (a commercially available phosphite) -phosphine: triphenyl phosphine
- -T-1:: a commercially available dialkylthioether compound
- -T-2:: pentaerythritol tetrakis (lauryl)thiopropionate)

The constituents were compounded in the quantities as recorded in the table hereinafter in an extruder adjusted at an average temperature of 305°C. Pellets were chopped from the resulting compounds; circular test plates having a diameter of 10 centimetres and a thickness of approximately 3 millimetres were manufactured from the pellets (by injection-moulding at approximately 290°C). The resulting plates were then stored for a fortnight at a relative humidity of approximately 68%. The yellowing index of the plates was then determined according to ASTM D 1925. Subsequently the plates were heated in a vacuum moulding machine for three minutes by radiation (radiation temperature 195°C. The spacing between the heating element and the plates was approximately 10 centimetres.

The plates (without having been deformed) were then evaluated visually with regard to bubbles at the surface. The found results and the evaluation scale used for the bubble formation are recorded in the table hereinafter.

**TABLE**

| | 1 | 2 | 3 | 4 | 5 | 9 | 6 | 7 | 8 |
|---|---|---|---|---|---|---|---|---|---|
| Example | A | B | C | D | E | F | I | II | III |
| Constituent (parts by weight) | | | | | | | | | |
| .PC | 100 | - | - | - | - | 100 | - | - | - |
| .CPC | - | 100 | 100 | 100 | 100 | - | 100 | 100 | 100 |
| | | | | | | | | | |
| .F-1 | - | - | 0.1 | - | - | - | - | - | - |
| .F-2 | - | - | - | 0.1 | - | - | - | - | - |
| .F-3 | - | - | - | - | 0.1 | - | - | - | - |
| | | | | | | | | | |
| Phosphine | - | - | - | - | - | - | 0.1 | - | - |
| .T-1 | - | - | - | - | - | - | - | 0.1 | - |
| .T-2 | - | - | - | - | - | 0.2 | - | - | 0.1 |
| | | | | | | | | | |
| Properties Yellowing index | 3.3 | 3.4 | 2.0 | 2.0 | 1.9 | 2.3 | 2.2 | 2.4 | 2.2 |
| Bubble formation* | +++ | 0 | ++ | ++ | ++ | +++ | 0 | + | 0 |

| | | | | | | | | | |
|---|---|---|---|---|---|---|---|---|---|
| * Bubble formation: 0 no visible bubbles + less than 1 bubble per cm2 ++ more than 1, but less than 5 bubbles per cm2 +++ more than 5 bubbles per cm2 | | | | | | | | | |

It may be seen from the table that plates obtained from pure copolyester carbonates (without a stabiliser) could indeed be thermally deformed without pre-drying (comparative example B). However, the plate had already yellowed before heating in the vacuum moulding machine. Addition of a stabiliser (comparative examples C, D and E) indeed leads to a reduction of the yellowing but too strong a bubble formation occurs. The use of a stabiliser according to the invention (examples I, II and III) results in a good combination of properties: low yellowing and no or only slight bubble formation. The use of the same stabiliser as used in example II in combination with a polycarbonate (comparative example F) does not lead to the desired combination of properties.

## Claims

1. A polymer mixture based on a copolyester carbonate derived from a dihydric phenol compound, a carbonate precursor and an aliphatic alpha, omega dicarboxylic acid or an ester precursor thereof mixed with a stabiliser, wherein the polymer mixture comprises an organic thio compound and/or an organic phosphine compound as a stabiliser but does not comprise a phosphite.

2. A polymer mixture as claimed in Claim 1, wherein the polymer mixture comprises a compound of the formula R - S - R' in a quantity of 0.01 to 3 parts by weight per 100 parts by weight of the copolyester carbonate as a thio compound, R being an organic radical and R' being an organic radical or a hydrogen atom.

3. A polymer mixture as claimed in Claim 1, wherein the polymer mixture comprises a phosphine of the formula R - P(R') - R'' in a quantity of 0.01 to 3 parts by weight per 100 parts by weight of the copolyester as a stabiliser, R, R' and R'' independently of each other being an organic radical which is bonded to the phosphorus atom via a carbon atom.

4. A plate-shaped or film-shaped product manufactured by extrusion from the polymer mixture as claimed in Claim 1.

## Patentansprüche

1. Eine Polymermischung, basierend auf einem Copolyestercarbonat, abgeleitet von einer zweiwertigen Phenolverbindung, einem Carbonat-Vorläufer und einer aliphatischen alpha-, omega-Dicarbonsäure oder einem Estervorläufer derselben, gemischt mit einem Stabilisator, worin die Polymermischung eine organische Thioverbindung und/oder eine organische Phosphinverbindung als Stabilisator umfaßt, jedoch nicht ein Phosphit umfaßt.

2. Eine Polymermischung wie in Anspruch 1 beansprucht, worin die Polymermischung eine Verbindung der Formel R - S - R' in einer Menge von 0,01 bis 3 Gewichtsteilen pro 100 Gewichtsteile des Copolyestercarbonats als eine Thioverbindung umfaßt, wobei R ein organischer Rest und R' ein organischer Rest oder ein Wasserstoffatom ist.

3. Eine Polymermischung wie in Anspruch 1 beansprucht, worin die Polymermischung ein Phosphin der Formel R - P(R') - R" in einer Menge von 0,01 bis 3 Gewichtsteilen pro 100 Gewichtsteile des Copolyesters als einen Stabilisator umfaßt, wobei R, R' und R" unabhängig voneinander ein organischer Rest sind, der an das Phosphoratom über ein Kohlenstoffatom gebunden ist.

4. Ein platten-förmiges oder film-artiges Produkt, hergestellt durch Extrusion aus der wie in Anspruch 1 beanspruchten Polymermischung.

## Revendications

1. Mélange de polymère à base d'un copoly(ester carbonate) dérivé d'un diphénol, d'un précurseur de carbonate et d'un acide aliphatique α,ω-dicarboxylique ou d'un ester précurseur d'un tel acide, mélangé avec un stabilisant, lequel mélange de polymère contient, en tant que stabilisant, un composé organique de type thio et/ou un composé organique de type phosphine, mais ne contient aucun phosphite.

2. Mélange de polymère conforme à la revendication 1, qui contient en tant que composé thio un composé de formule R-S-R' où R représente un groupe organique et R' représente un atome d'hydrogène ou un groupe organique, en une proportion de 0,01 à 3 parties en poids pour 100 parties en poids de copoly(ester carbonate).

3. Mélange de polymère conforme à la revendication 1, qui contient en tant que stabilisant une phosphine de formule R-P(R')-R" où R, R' et R" représentent chacun, indépendamment les uns des autres, un groupe organique lié à l'atome de phosphore par l'intermédiaire d'un atome de carbone, en une proportion de 0,01 à 3 parties en poids pour 100 parties en poids de copoly(ester carbonate).

4. Produit en forme de plaque ou de film, fabriqué par extrusion d'un mélange de copolymère conforme à la revendication 1.
